Europäisches Patentamt

European Patent Office

Office européen des brevets

(11) Veröffentlichungsnummer : **0 174 496 B1**

# (12) EUROPÄISCHE PATENTSCHRIFT

(45) Veröffentlichungstag der Patentschrift :
17.11.94 Patentblatt 94/46

(51) Int. Cl.[5] : **G01J 9/00**

(21) Anmeldenummer : 85109907.7

(22) Anmeldetag : 07.08.85

(54) Verfahren zur Bestimmung der Strahlungswellenlänge und der wellenlängenkorrigierten Strahlungsleistung monochromatischer Lichtquellen, sowie Einrichtung zur Durchführung des Verfahrens.

(30) Priorität : 10.08.84 DE 3429541

(43) Veröffentlichungstag der Anmeldung :
19.03.86 Patentblatt 86/12

(45) Bekanntmachung des Hinweises auf die
Patenterteilung :
17.11.94 Patentblatt 94/46

(84) Benannte Vertragsstaaten :
AT CH DE FR GB IT LI SE

(56) Entgegenhaltungen :
DE-A- 3 030 210
DE-A- 3 108 239
DE-B- 2 351 339
DE-B- 2 503 790
DE-B- 2 537 089
DE-B- 2 834 983
Technical Digest Symposium on Optical Fiber
Measurements, 1980, NBS Special Publication
597, Seiten 113-117
DIN 5031 Teil 1

(73) Patentinhaber : **Blazek, Vladimir, Dr.-Ing.
Königshügel 31
D-52074 Aachen (DE)**
Patentinhaber : **Seidenberg, Jürgen, Dr.
Wildbacher Mühle 53
D-52074 Aachen (DE)**

(72) Erfinder : **Blazek, Vladimir, Dr.-Ing.
Königshügel 31
D-52074 Aachen (DE)**
Erfinder : **Seidenberg, Jürgen, Dr.
Wildbacher Mühle 53
D-52074 Aachen (DE)**

(74) Vertreter : **Münich, Wilhelm, Dr. et al
Kanzlei Münich, Steinmann, Schiller
Wilhelm-Mayr-Str. 11
D-80689 München (DE)**

EP 0 174 496 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zur Bestimmung sowohl der Wellenlänge als auch der Strahlungsleistung einer monochromatischen Lichtquelle gemäß dem Oberbegriff des Patentanspruchs 1.

Ein gattungsgemäßes Verfahren ist aus "Technical Digest Symposium on Optical Fiber Measurements", 1980 NBS Special Publication 597, S. 113 - 117 bekannt. Bei diesem Verfahren wird zur Bestimmung sowohl der Wellenlänge als auch der Strahlungsleistung einer monochromatischen Lichtquelle eine Photodetektoranordnung verwendet, die zwei Photodetektoren aufweist. Die beiden Photodetektoren haben unterschiedliche spektrale Empfindlichkeiten, so daß beispielsweise durch einen Dividiervorgang die Wellenlänge ermittelt werden kann.

Die Verwendung zweier Photodetektoren hat jedoch den Nachteil, daß aufgrund unterschiedlicher Alterungen der beiden Photodetektoren im Laufe der Zeit Meßfehler auftreten können. Darüber hinaus ist es schwierig, die Stahlungsleistung zu bestimmen, da bei der aus der vorstehend genannten Literaturstelle bekannten Vorrichtung in jedem der Strahlengänge ein optisches Element vorhanden ist, an dem Reflexionen etc. auftreten können, durch die die Bestimmung der Strahlungsleistung mit Fehlern behaftet wird.

Der Erfindung liegt die Aufgabe zugrunde, ein Verfahren zur Bestimmung sowohl der Wellenlänge als auch der Strahlungsleistung einer monochromatischen Lichtquelle gemäß dem Oberbegriff des Patentanspruchs 1 derart weiterzubilden, daß die Meßfehler, die durch die Verwendung mehrerer Photodetektoren und/oder durch eine in jedem Strahlengang immer vorhandenen Beaufschlagungsvorrichtung resultieren, vermieden werden.

Aus DE-A-3 108 239 ist ein Verfahren zur Wellenlängenbestimmung bekannt, bei dem zwei Detektoren unterschiedlicher Empfindlichkeit oder ein Detektor sowie ein optischer Umschalter verwendet werden.

Eine erfindungsgemäße Lösung dieser Aufgabe ist im Patentanspruch 1 angegeben.

Die Erfindung geht dabei von dem Grundgedanken aus, daß anstelle mit zwei Photodetektoren auch mit einem "realen" Photodetektor und einem simulierten "fiktiven" Photodetektor gearbeitet werden kann. Hierzu wird die spektrale Gesamtempfindlichkeit des "realen" Photodetektors (inclusive Beaufschlagungsvorrichtung) extern und wiederholbar so beeinflußt, daß eine andere spektrale Gesamtempfindlichkeit des "fiktiven" zweiten Photodetektors gezielt simuliert wird. So erhält man wiederum zwei unterschiedliche Signale $I1(\lambda)$ und $I2(\lambda)$.

Diese Beeinflussung erfolgt elektronisch durch eine Änderung des Arbeitspunktes des Photodetektors.

Die Verwendung nur einer Photodiode und die Bildung spektraler Unterschiede elektronisch durch eine Änderung des Arbeitspunktes haben den Vorteil, daß Temperaturfehler, die durch unterschiedliche Temperaturen oder Alterungen zweier Photodioden entstehen können, ausgeschlossen sind.

Die Erfindung wird nachstehend anhand der Zeichnung näher erläutert, in der zeigen:

Fig. 1      das Blockschaltbild einer für das erfindungsgemäße Verfahren geeigneten Meßeinrichtung,

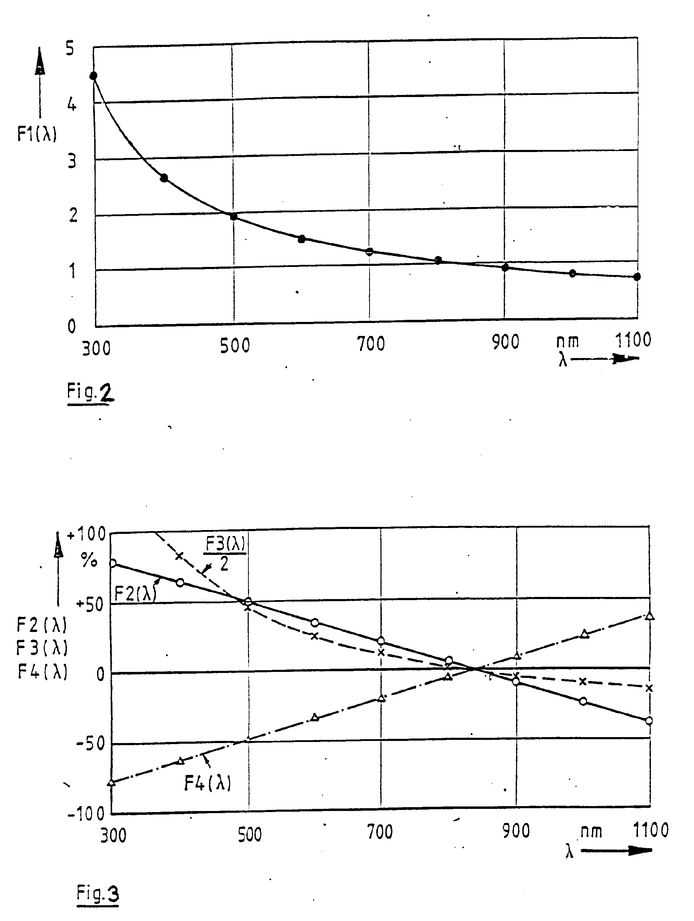

Fig. 2 und Fig. 3    die Normierung des Signalverlaufes auf eines der beiden Signale,

Fig. 4      die absolute spektrale Empfindlichkeit eines Photodetektors, und

Fig. 5      die hieraus gewonnene Leistungskorrekturfunktion.

Bei dem erfindungsgemäßen Meßverfahren wird ein "realer" und ein "fiktiver" Photodetektor verwendet, die im interessierenden Wellenlängenbereich unterschiedliche Gesamtempfindlichkeitskurven aufweisen. Photodetektoren sind dabei optische Empfänger beliebiger Art, die die eingehende optische Strahlung in elektrische Signale umwandeln. Sie bestehen im allgemeinen aus einem optoelektronischen Wandler (beispielsweise Fotodiode) und einer Beaufschlagungsvorrichtung, über welche ein Lichtstrahl dem detektierenden Bereich des optoelektronischen Wandlers zugeführt wird, sowie einer elektrischen Steuerschaltung.

Die spektrale Gesamtempfindlichkeit eines Photodetektors, nämlich der wellenlängenabhängige Verlauf der Intensität des elektrischen Ausgangssignals in Abhängigkeit der Intensität einer der Beaufschlagungsvorrichtung zugeführten optischen Strahlung, resultiert vornehmlich aus der spektralen Empfindlichkeit des optoelektronischen Wandlers selbst und den überlagerten spektralen Eigenschaften der Beaufschlagungsvorrichtung, deren Dämpfungswerte beispielsweise wellenlängenabhängig sind.

Im sogenannten Kalibriervorgang werden zunächst mittels einer wellenlängendurchstimmbaren Eichstrahlung Größen, die aus den spektralen Gesamtempfindlichkeitswerten der Photodetektoren abgeleitet werden (s.u.), in einer elektronischen Speichereinheit der Meßeinrichtung abgelegt und zwar beispielsweise in 1nm Schritten innerhalb des gesamten Meßbereichs.

Im Meßvorgang fällt die zu messende monochromatische Meßstrahlung über die Beaufschlagungsvorrichtung auf die aktiven Flächen des Photodetektors. Mit einer Recheneinheit werden die nun aus den gemessenen elektrischen Signalen abgeleiteten Werte mit den in der Speichereinheit abgespeicherten Kalibriergrößen verglichen. Dabei ergibt sich nur dann eine Übereinstimmung, wenn die Kalibriergröße der Wellenlänge zum Ver-

EP 0 174 496 B1

gleich herangezogen wird, die in der Meßstrahlung vorherrscht, so daß damit die Wellenlänge der Meßstrahlung eindeutig definiert und angezeigt werden kann.

Ist die absolute spektrale Gesamtempfindlichkeit des realen oder fiktiven Photodetektors bekannt (z.B. nach einer Eichmessung oder aufgrund genauer Spezifikationen), so kann zusätzlich zur Anzeige der Wellenlänge auch die aktuelle wellenlängenkorrigierte Strahlungsleistung oder Bestrahlungsstärke der Meßstrahlung angezeigt werden.

Besonders vorteilhaft wirken sich die digitale Erfassung, Speicherung und Auswertung der Eich- und Meßdaten sowie eine digitale Anzeige aus. Der Eichvorgang kann bei jeder individuellen Meßeinrichtung in gleicher Weise durchgeführt und auch automatisch gesteuert werden, wobei die Exemplarstreuungen sämtlicher Baugruppen eines jeweiligen Meßgerätes erfaßt werden. Die Anzeigeeinrichtung kann sowohl für die Anzeige der Wellenlänge als auch der wellenlängenkorrigierten optioschen Leistung verwendet werden. Bei einer analogen Direktanzeige der Leistung müßte für jede Wellenlänge eine spezielle Skala vorgesehen sein.

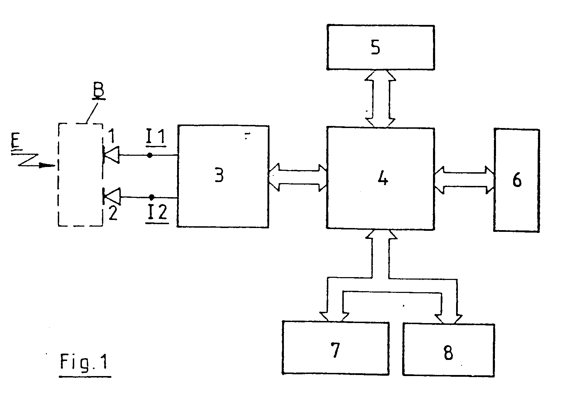

Fig. 1 zeigt in schematischer Darstellung das Blockschaltbild einer für das erfindungsgemäße Verfahren verwendbaren Meßeinrichtung. Dabei ist der reale Photodetektor mit 1 und der fiktive Photodetektor mit 2 bezeichnet. Weiterhin bedeuten:

3        Meßwerterfassungs- und verabreitungseinheit
4        Recheneinheit
5        Bedienungsfeld
6        Speichereinheit
7        Anzeigeeinheit
8        Datenschnittstelle
$\underline{B}$        Beaufschlagungsvorrichtung
$\underline{E}$        Strahlungsfluß
I1,I2        Meßsignale.

Im folgenden sind als Beispiel einige mögliche Berechnungsvorschriften für F ($\lambda$) angegeben, falls zwei Photodetektoren, nämlich ein realer und ein fiktiver verwendet werden:

$$F1(\lambda) = \frac{I1(\lambda)}{I2(\lambda)}$$

$$F2(\lambda) = \frac{I1(\lambda) - I2(\lambda)}{I1(\lambda)}$$

$$F3(\lambda) = \frac{I1(\lambda) - I2(\lambda)}{I2(\lambda)}$$

$$F4(\lambda) = \frac{I2(\lambda) - I1(\lambda)}{I1(\lambda)}$$

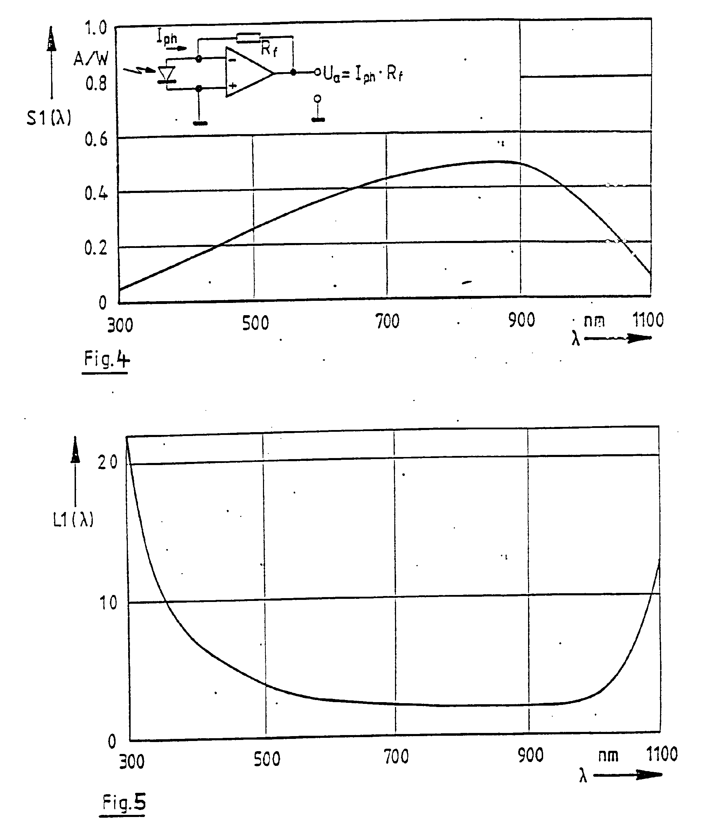

Diese Funktionen sind für die Signale I1 und I2 in Fig. 4 und Fig. 5 dargestellt.

Durch die Normierung auf eines der beiden Signale I1 oder I2 sind die angegebenen Funktionen F($\lambda$) im Linearitätsbereich der Detektoren unabhängig von der Lichtleistung der Kalibrierlichtquelle. In der Speichereinheit 6 können diese Funktionswerte F($\lambda$) zusammen mit der Information über die eingestellte Wellenlänge der Kalibrierlichtquelle abgelegt werden.

Die Kalibrierlichtquelle sollte eine kleinere spektrale Bandbreite als die Schrittweite der Wellenlängeneinstellung der Kalibrierlichtquelle aufweisen. Damit ist der normalerweise nur einmal notwendige Wellenlängenkalibriervorgang beendet. Falls die erfindungsmäßige Meßeinrichtung auch zur automatisch wellenlängenkorrigierten Messung der Strahlungsleistung verwendet werden soll, kann z.B. schon direkt während der Wellenlängenkalibrierung eine isoenergetische, monochromatische Kalibrierlichtquelle benutzt werden, um die absolute spektrale Kalibrierung mindestens eines der Phtodetektoren zu ermöglichen. Es sind aber auch andere Verfahren dankbar wie z.B. die Kalibrierung mit einem geeichtem Radiometer oder z.B. nach der DE-PS 29 04 984. Die Kalibrierdaten können - wie in dem Fall, daß die absolute spektrale Gesamtempfindlichkeit der Photodetektoren bekannt ist - über das Bedienungsfeld 5 oder die Datenschnittstelle 8 eingegeben werden und werden z.B. in Form einer Leistungskorrekturfunktion L1($\lambda$) in der Speichereinheit abgelegt.

Fig. 4 zeigt eine mögliche absolute spektrale Gesamtempfindlichkeitskurve SI($\lambda$) eines Detektors mit Beaufschlagungsvorrichtung, während Fig. 5 die daraus von der Recheneinheit ermittelte Leistungskorrekturfunktion LI($\lambda$) zeigt. Sobald die erfindungsgemäße Meßeinrichtung die Kurven F($\lambda$) und LI($\lambda$) gespeichert hat, sind sowohl Wellenlängemessung als auch automatisch wellenlängenkorrigierte Leistungsmessung möglich.

Die Messung gestaltet sich wie folgt: Der zu messende Strahlungsfluß $\underline{E}$ wird über die Beaufschlagungsvorrichtung $\underline{B}$ wie im oben beschriebenen Kalibriervorgang auf die aktive Fläche der Photodetektoren 1 und 2 aufgebracht. Die Recheneinheit 4 berechnet aus den Signalen I1($\lambda$) und I2($\lambda$) den zugehörigen Wellenlängenfunktionswert (F $\lambda$ meß). Nach einem Vergleich mit der abgespeicherten Kurve F($\lambda$) kann die Wellenlänge des Meßstrahlungsflusses gegebenenfalls nach einem Interpolationsalgorithmus mit der Anzeigeneinheit 7 an-

3

gezeigt und/oder über die Datenschnittstelle 8 ausgegeben werden. Mit der festgestellten Wellenlänge kann dann der entsprechende Wert aus der Leistungskorrekturfunktion L1($\lambda$) ermittelt werden. Mit diesem Wert ist eine Umrechnung auf die absolute Leistung (oder Bestrahlungsstärke) möglich. Auch dieser Wert kann z.B. in W (oder mW) oder - relativ bezogen auf einen Wert von z.B. 1mW - in dBm mit 7 angezeigt und/oder über 8 ausgegeben werden.

Zur Erhöhung der Meßgenauigkeit und/oder zur Erweiterung des Meß- bzw. Eindeutigkeitsbereichs können aber auch mehr als zwei Photodetektoren, d.h. ein realer und mehrere fiktive Photodetektoren verwendet werden, die jeweils unterschiedliche spektrale Empfindlichkeitsverläufe haben. Dann werden Meßsignale I1...I4 einer entsprechend erweiterten Meßwerterfassungs- und verarbeitungseinheit 3 zugeführt.

Bei Verwendung von mindestens drei Photodetektoren (einem realem und zwei fiktiven Photodetektoren) jeweils unterschiedlicher Gesamtempfindlichkeit kann überprüft werden, ob die zu messende optische Strahlung tatsächlich monochromatisch ist, d.h. zumindest eine sehr enge Bandbreite des Wellenlängenspektrums aufweist.

Das erfindungsgemäße Verfahren würde an sich auch dann zu Anzeigenwerten führen, wenn die zu messende optische Strahlung Licht erheblich unterschiedlicher Wellenlängen enthält. Solche Meßwerte wären natürlich falsch und irreführend. Um derartige Fehler zu vermeiden, kann das erfindungsgemäße Verfahren in der Weise weitergebildet werden, daß mindestens drei Photodetektoren unterschiedlicher spektraler Empfindlichkeit verwendet werden, welche in verschiedenen Zweierkombinationen jeweils zur Bildung eines wellenlängenabhängigen Signals in der oben beschriebenen Weise beaufschlagt werden, daß diese Signale einer Vergleichsschaltung zugeführt werden, welche die Signale daraufhin überprüft, ob sie eine übereinstimmende Wellenlänge aussagen, und daß im Falle der Abweichung der Wellenlängenaussagen um mehr als einen vorgegebenen Grenzwert eine Meldeeinrichtung betätigt wird. Übereinstimmende Wellenlängenaussagen erhält man bei Messungen mit verschiedenen Zweierkombinationen von Photodetektoren im allgemeinen nur dann, wenn praktisch monochromatisches Licht gemessen wird. Wenn dagegen optische Strahlung gemessen würde, welches beispielsweise Licht der Wellenlänge 850 nm und 1.350 nm enthält, würde die Meldeeinrichtung ein Warnsignal abgeben, welches der Bedienungsperson anzeigt, daß keine monochromatische Strahlung vorliegt und eine Messung natürlich zu unsinnigen Ergebnisse führen würde. Als zusätzlicher Vorteil einer solchen Mehrfachmessung ergibt sich, das Warnsignale auch dann abgegeben werden, wenn das Meßgerät fehlerhaft ist.

Ist der Strahlungsfluß $\underline{E}$ nicht zeitlich kontinuierlich, sondern z.B. gepulst, so können von der Recheneinheit 4 auch andere Parameter des Strahlungsflusses berechnet werden, wie z.B. die Pulsenergie oder Pulsdauer u.a.

## Patentansprüche

1. Verfahren zur Bestimmung sowohl der Wellenlänge als auch der Strahlungsleistung einer monochromatischen Lichtquelle unter Verwendung einer Einrichtung, die eine Beaufschlagungsvorrichtung, die das Licht der Lichtquelle auf eine Photodetektoranordnung führt und eine digitale Rechen- und Speichereinheit aufweist, an der die Ausgangssignale der Photodetektoranordnung anliegen,
   **dadurch gekennzeichnet,** daß
      a) die Photodetektoranordnung lediglich einen Photodetektor aufweist, dessen spektrale Gesamtempfindlichkeit bei der Messung elektronisch geändert wird, so daß wenigstens zwei zu unterschiedlicher spektraler Gesamtempfindlichkeit gehörende Ausgangssignale erhalten werden,
      b) zum Kalibrieren der Wellenlängenmessung der Strahlungsfluß (E) einer monochromatischen, Wellenlängendurchstimmbaren Eichlichtquelle über die Beaufschlagsvorrichtung (B) auf den Photodetektor geleitet wird und die bei bestimmten, über den gesamten zu erfassenden Spektralbereich verteilten Wellenlängen mit unterschiedlicher spektraler Gesamtempfindlichkeit erhaltenen Ausgangssignale an die digitale Speichereinheit (6) angelegt werden, die die Ausgangssignal-Paare in Zuordnung zur Wellenlänge speichert,
      c) zum Kalibrieren der Strahlungsleistungsmessung der Strahlungsfluß (E) einer isoenergetischen, monochromatischen Lichtquelle bekannter Leistung über die Beaufschlagungsvorrichtung auf den Photodetektor geleitet wird, dessen Ausgangssignal für verschiedene, über den gesamten zu erfassenden Spektralbereich verteilte Wellenlängen an die digitale Speichereinheit (6) angelegt wird, die diese Ausgangssignale in Zuordnung zur Wellenlänge speichert,
      d) der Strahlungsfluß der Lichtquelle, deren Wellenlänge und Strahlungsleistung gemessen werden soll, über die Beaufschlagungsvorrichtung (B) auf den Photodetektor geleitet wird, aus dessen Ausgangssignalen bei geänderter spektraler Gesamtempfindlichkeit die Recheneinheit unter Verwendung der in der Speichereinheit während der Kalibriervorgänge gemäß den Merkmalen b) und c) gespeicherten Werten die Wellenlänge und die Strahlungsleistung bestimmt.

## Claims

1. Process of measuring the radiation wavelength and the radiation power of a monochromatic light source, employing a device comprising an influencing means passing the light from said light source onto a photodetector array, and a digital arithmetic and storage unit which the output signals from said photodetector array are applied to,

   **characterized in** that

   (a) said photodetector array comprises merely one photodetector whose spectral overall responsiveness is electronically varied during measurement for obtaining at least two output signals appertaining each to a different spectral overall responsiveness,

   (b) for calibration of the wavelength measurement the radiation flux (E) of a monochromatic source of calibration light, which may be tuned in terms of wavelength, is passed via said influencing means (B) onto said photodetector while the output signals, which are obtained at specific wavelengths distributed over the entire spectral range to be covered and having each a different spectral overall responsiveness, are applied to said digital storage unit (6) which stores the pairs of output signals in a form associating them with the wavelengths,

   (c) for calibration of the measurement of the radiation power said radiation flux (E) of an iso-energetic monochromatic light source of known output rating is passed via said influencing means onto said photodetector whose output signal for different wavelengths distributed over the entire spectral range to be covered is applied to said digital storage unit (6) which stores these output signals in a form associating them with the wavelengths,

   (d) the radiation flux of said light source whose wavelength and radiation power are to be measured, is passed via said influencing means (B) onto said photodetector whose output signal is used by said arithmetic unit, in the case of a varied spectral overall responsiveness, for determining, with employment of the values stored in said storage unit during the calibration steps according to features (b) and (c), the wavelengths and the radiation power.

## Revendications

1. Procédé à déterminer la longueur d'onde et la puissance de rayonnement d'une source lumineuse monochromatique, en utilisant un dispositif comprenant un moyen d'influence, qui passent la lumière de ladite source lumineuse sur un arrangement à photodétecteurs, et une unité numérique de calcul et de mémorisation à laquelle sont appliqués les signaux de sortie dudit arrangement de photodétecteurs,

   **caractérisé en ce** que

   (a) ledit arrangement à photodétecteurs ne comprend qu'un seul photodétecteur dont la sensibilité spectrale globale est variée, de manière électronique, au cours du mesurage afin d'obtenir au moins deux signaux de sortie dont chacun est affecté à une autre sensibilité spectrale globale différente,

   (b) pour le calibrage de mesure de la la longueur d'onde, le flux énergétique (E) d'une source de lumière de calibrage monochromatique, laquelle peut être variée en sa longueur d'onde, est passé via ledit moyen d'influence (B) sur ledit photodétecteur, pendant que les signaux de sortie, qui sont obtenus à des longueurs d'ondes spécifiées, distribuées sur tout le domaine spectral à déterminer, et dont chacun présent une sensibilité spectrale globale différente, sont appliqués à ladite unité numérique de mémorisation (6) qui met en mémoire les paires de signaux de sortie de façon à les affecter à la longueur d'ondes,

   (c) pour le calibrage de mesure de la puissance de rayonnement, ledit flux énergétique (E) d'une source lumineuse monochromatique iso-énergétique à puissance connue, est passé via ledit moyen d'influence sur ledit photodétecteur dont le signal de sortie pour des longueurs d'ondes distribuées sur tout le domaine spectral à détecter, est appliqué à ladite unité numérique de mémorisation (6) qui met en mémoire ces signaux de sortie de façon à les affecter à la la longueur d'ondes,

   (d) et en ce que le flux énergétique du rayonnement de ladite source lumineuse, dont la longueur d'onde et la puissance de rayonnement sont à mesurer, est passé via ledit moyen d'influence (B) sur ledit photodétecteur dont le signal de sortie est utilisé par ladite unité de calcul, au cas d'une sensibilité spectrale globale variée, à déterminer, en utilisant les valeurs mises en mémoire dans ladite unité de mémori-

5

sation au cours des opérations de calibrage selon les caractéristiques (b) et (c), les longueurs d'ondes et la puissance de rayonnement.

Fig.1

Fig.2

Fig.3

Fig.4

Fig.5